# EUROPEAN PATENT APPLICATION

(11) **EP 4 654 527 A1**
(43) Date of publication of application: **26.11.2025**
(21) Application number: 24176841.5
(22) Date of filing: 20.05.2024
(51) Int. Cl.: H04L 9/40, G06F 21/57

(54) **A METHOD FOR EXPOSURE MANAGEMENT AND AN EXPOSURE MANAGEMENT SYSTEM**

(71) Applicant: WithSecure Corporation, 00180 Helsinki (FI)
(72) Inventor: NIEMELÄ, Jarno, 00180 HELSINKI (FI)
(74) Representative: Berggren Oy

(57) **Abstract**

An exposure management system, a server (102, 202) of an exposure management system and a method for exposure management in a network, the network (201) comprising at least one host, such as an endpoint (101, 205a-205h) and/or a server (102, 202), wherein a security agent (206a - 206h, 204a) is installed to at least one host. The method comprises requesting and/or receiving a list of vulnerabilities and/or misconfigurations of the at least one host in the network (201) and/or a list of vulnerabilities and/or misconfigurations of the network (201) and running an attack path simulation, e.g. at a backend system and/or at the at least one server (102, 202), for the at least one host of the network and/or the network (201). If an entry attack vector to a host is found with the attack path simulator, the method comprises determining and/or creating at least one attack path related to the host, e.g. for each identified attack path, based on the vulnerability and/or misconfiguration information. The method further comprises forming an attack path map based on the attack path simulation, verifying each determined attack path of the attack path map by the at least one agent (206a - 206h, 204a) in the attack path, e.g. by verifying by the agent (206a - 206h, 204a) that an attack or a part of the attack can be carried out as simulated, and removing the attacks and/or paths from the attack path map which are attacks and/or paths that were determined by the agent (206a - 206h, 204a) for being prevented, e.g. by a security control, in such a way that they cannot be carried out as simulated.

## Description

### Technical Field

The present invention relates to an exposure management system, a server of an exposure management system and a method for exposure management.

### Background

Security and threat detection systems for computers and computer networks are used to detect threats and anomalies in computers and computer networks. Examples of such are Endpoint Protection Platform (EPP), Endpoint Detection & Response (EDR) and Managed Detection and Response (MDR) products and services. An endpoint protection platform (EPP) is a solution deployed on endpoint devices to prevent file-based malware attacks and to detect malicious activity. Also EDR systems focus on the detection and monitoring of a breach as it occurs and helps to determine how best to respond the detected breach. EDR systems also provide the investigation and remediation capabilities needed to respond to dynamic security incidents and alerts. MDR in turn is a managed cybersecurity service providing service for threat detection, response, and remediation.

In the recent years, also vulnerability management systems have become more widely used. These systems primarily focus on identifying and addressing vulnerabilities within an organization's IT infrastructure, applications, and systems. Vulnerability management systems can for example systematically scan, assess, and prioritize vulnerabilities to determine which pose the greatest risk to the organization. Based on this information the vulnerability management system can e.g. patch existing vulnerabilities and thus reduce the attack surface by proactively identifying and mitigating vulnerabilities before they can be exploited by attackers. Risk management and evaluation can be taken further with Exposure Management systems which not only take care of analyzing vulnerabilities but also other factors that contribute to the organization's risk exposure, such as threat landscape, business impact, and effectiveness of security controls.

One method which can be used by an exposure management system is attack path mapping. Attack path mapping focuses on understanding potential attack pathways and security weaknesses by understanding the potential pathways that attackers could use to compromise an organization's systems and data. Attack path mapping can involve identifying and analyzing the various entry points, vulnerabilities, and attack vectors that attackers could exploit to achieve their objectives. The goal of attack path mapping is to gain insights into the organization's attack surface and identify potential weaknesses and security gaps that could be exploited by attackers.

Breach simulations can be utilized for attack path mapping and exposure management products and services. Vulnerabilities can be rated based on simulated attack paths and it can be decided which vulnerabilities should be addressed first. The problem is that without in-dept knowledge of target network layout (e.g. routing and firewall rules, local user privileges, browser AWS and other cloud credentials, API keys, registry configurations, file write permissions, etc.) any breach simulations are often incomplete and may for example present situation as much worse than it actually is. For this reason, more accurate and reliable exposure management systems are needed.

### Summary

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

According to a first aspect, the invention relates to a method, e.g. a computer implemented method, for exposure management in a network, the network comprising at least one host, such as an endpoint and/or at least one server, wherein a security agent is installed to the at least one host. The method comprises requesting and/or receiving a list of vulnerabilities and/or misconfigurations of the at least one host in the network and/or a list of vulnerabilities and/or misconfigurations of the network, and running an attack path simulation, e.g. at a backend system and/or at the at least one server, for the at least one host of the network and/or the network. If an entry attack vector to a host is found with the attack path simulator, the method further comprises determining and/or creating at least one attack path related to the host based on the vulnerability and/or misconfiguration information, e.g. determining and/or creating an attack path for each identified attack path based on the vulnerability and/or misconfiguration information. The method further comprises forming an attack path map based on the attack path simulation, e.g. based on the determined and/or created attack paths. The method further comprises verifying each determined attack path of the attack path map by the at least one agent in the attack path, e.g. by verifying by the agent that an attack or a part of the attack can be carried out as simulated, and removing the attacks and/or paths from the attack path map which are attacks and/or paths that were determined by the agent for being prevented, e.g. by a security control, in such a way that they cannot be carried out as simulated.

In one embodiment of the invention the method comprises receiving a list of detected known vulnerabilities found by a vulnerability management service.

In one embodiment of the invention the agents verify what attacks, vulnerability exploits and/or misconfigurations of the attack path simulation are usable, e.g. so that they are utilizable by malicious actors.

In one embodiment of the invention verifying the attack path with at least one agent comprises sending instructions to an agent in the host where a next potential step in attack path is. In one embodiment of the invention the (e.g. unverified) steps of the attack path are verified as long as the steps of the attack path are usable by a malicious actor. In one embodiment of the invention the verification of a part of the attack path is continued to next part of the attack path as long as the verified steps are usable by a malicious actor or as long as the whole attack path is verified to be usable by a malicious actor (e.g. in which case all steps can be carried out as simulated by a malicious actor).

In one embodiment of the invention a simulated attack path is deleted from the attack path map if a part of the path is not utilizable by malicious actors based on the verification by the at least one agent.

In one embodiment of the invention an attack path is kept in the attack path map if all steps and/or parts of the attack path are verified by the at least one agent to be implementable and/or usable by a malicious actor.

In one embodiment of the invention verifying a step and/or a part of the attack path comprises at least one of the following: verifying whether there is suitable network connection from a host to next part of the attack path, verifying whether the necessary preconditions for privilege escalation are in place, verifying whether the host has credentials which are accessible to a malicious actor, verifying whether a user would be able to write or execute files in a predefined location, such as a register, verifying whether a vulnerable application has been executed at the host, verifying whether there are vulnerabilities suitable for lateral movement on other hosts, verifying domain level privilege escalation, verifying available credentials that would be required to escalate attack further on an internal server.

In one embodiment of the invention the agent uses or the agents use at least one of the following information when verifying the attack path: target network layout, routing rules, firewall rules, local user privileges, browser stored credentials, cloud credentials, API keys, registry configurations, file write permissions, list of services that are running which listen on external network interfaces, cryptographic authentication keys, such as SSH-keys.

In one embodiment of the invention the entry attack vector to a host comprises at least remote code execution in publicly visible service, and/or phishing opportunity due to user having a vulnerable client or player software installed, and/or a client software application by which user can execute an application by clicking, such as an email client, a web browser, an instant messaging client. In one embodiment of the invention the entry attack vector to a host comprises information, such as EDR/MDR-system information and/or process execution logs, which indicate(s) that an installed application has been used for phishing.

In one embodiment of the invention the server of the network manages the attack path verification process by instructing individual agents at the hosts to verify their part of an attack path.

According to a second aspect, the invention relates to a server for an exposure management of a network, the network comprising at least one host, such as an endpoint and/or a server, wherein a security agent is installed to at least one host. The server is configured to request and/or to receive a list of vulnerabilities and/or misconfigurations of the at least one host in the network and/or a list of vulnerabilities and/or misconfigurations of the network, and to run an attack path simulation for the at least one host of the network and/or the network. If an entry attack vector to a host is found with the attack path simulator, the server is configured to determine and/or to create at least one attack path related to the host based on the vulnerability and/or misconfiguration information, e.g. configured to determine and/or create an attack path for each identified attack path based on the vulnerability and/or misconfiguration information. The server is further configured to form an attack path map based on the attack path simulation, e.g. based on the determined and/or created attack paths. The server is further configured to instruct the agents in the attack path to verify that an attack or a part of the attack can be carried out as simulated, and to remove, based on the information received from the agents, the attacks and/or paths from the attack path map which are attacks and/or paths that were determined by the agents for being prevented, e.g. by a security control, in such a way that they cannot be carried out as simulated.

According to a third aspect, the invention relates to an exposure management system comprising at least one endpoint comprising a security agent is installed to the endpoint, and/or at least one server, wherein the server is a server according to any embodiment of the invention.

In one embodiment of the invention the exposure management system is configured to carry out a method according to any embodiment of the invention.

According to a fourth aspect, the invention relates to a computer program comprising instructions which, when executed by a computer, cause the computer to carry out a method according to the invention.

According to a fifth aspect, the invention relates to a computer-readable medium comprising the computer program according to the invention.

With the solution of the invention, it's possible to provide reliable and realistic attack path mapping for exposure management systems. The solution of the invention is able to verify the simulation results in the real environment and thus the (final and verified) attack path maps are more reliable and realistic when compared to prior art solutions which only create attack path maps based on simulation. For this reason, by utilizing the solution of the invention, e.g. more reliable prioritization can be made for the vulnerabilities and thus the assets of the organization can be protected faster and more reliably than with the prior art solutions.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated.

Furthermore, it is to be understood that the use of "a" or "an", i.e. a singular form, throughout this document does not exclude a plurality.

### Brief description of the drawings

The embodiments of the invention are illustrated by way of example, and not by way of limitation, in the figures of the accompanying drawings.
- Figure 1: presents schematically an example network architecture of one embodiment of the invention.
- Figure 2: presents schematically an example network architecture of one embodiment of the invention.
- Figure 3: presents an example method according to one embodiment of the invention.
- Figure 4: presents an example computing device, such as a server, according to one embodiment of the invention.

### Detailed description

An exposure management system or service of the present invention may be part of a threat detection system or a separate system. In one embodiment of the invention the exposure management system or the threat detection system according to one embodiment of the invention may comprise hosts, e.g. at least one endpoint and a backend system comprising at least one backend server. In this case information, e.g. threat detection related data, can be shared between the hosts, e.g. between the endpoints and/or between the endpoints and the backend system.

Exposure management system or service can be used with other thread detection or threat prevention systems, such as EPP-, EDR- and/or MDR-system. Any of these systems may deploy data collectors or processing units, such as agents or sensors, on selected network endpoints, which can be any elements of IT infrastructure. Typically agents of EPP-system can focus on endpoint protection and thus on data processing while agents of EDR-system can focus on detection functions and thus on data collection. The data collectors observe activities happening at the endpoint and they cand send the collected data to a central, backend system, for example located in the cloud. When the backend receives data, the data can be processed (e.g. aggregated and enriched) before being analyzed and scanned by the security system provider for signs of security breaches and anomalies.

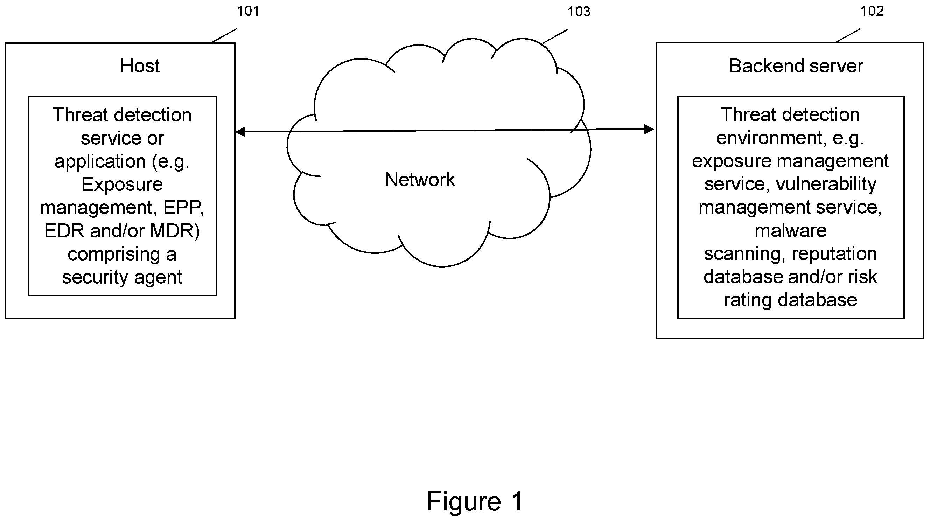

Figure 1 presents an example environment in which the solution of the invention can be used. In the solution of Figure 1 a system configuration is presented in which a local host 101, such as an endpoint, and a remote entity or server 102 are connected via a network 103. Here, the host 101 exemplifies any computer or communication system, including a single device, a network node or a combination of devices, on which malware scanning or collection of threat detection related information is to be performed. The scanning and/or analysis of the threat detection related data can be done at the endpoint and/or at the server. For example, the host 101 may include an endpoint, a personal computer, a personal communication device, a network-enabled device, a client, a firewall, a mail server, a proxy server, a database server, or the like. The server 102 exemplifies any computer or communication system, including a single device, a network node or a combination of devices, on which malware scanning or threat detection data analysis can be performed for the host 101 (such as an endpoint) or which can provide data for the host 101 (such as an endpoint) required to carry out required operations, e.g. malware scanning, threat detection related analysis, such as risk rating, reputation data and/or attack path verification (e.g. for attack path mapping). For example, the server 102 may include a security entity or a backend entity of a security provider, or the like, and the server 102 may be realized in a cloud implementation or the like.

According to exemplifying embodiments of the invention, malware scanning and/or threat detection data analysis at the host 101 and/or by the server 102 can be realized using a malware analysis environment, such as a virtual machine or emulator environment, arranged at the host and/ or at the server. For example, an agent or sensor, such as e.g. an anti-virus software can be installed/arranged at the host 101 to be used for attack path verification (e.g. for attack path mapping), malware scanning and/or threat detection data analysis. In one embodiment of the invention a sensor or agent at the computer is used to allow to intercept a file, a system configuration value and/or network operations called by the application. The sensor can be used to observe operation of the device, such as a computer, and information collected by the sensor can be used to detect malicious behavior of an application, a file and/or a process.

In one embodiment of the invention the malware scanning environment, service and/or software can detect starting and closing of applications, all unusual processes and attach monitoring to the required applications and processes. Also, when the services are started early, the service is able to detect and follow most of user's application. In one embodiment of the invention, when the malware scanning software or service is started up, it can perform running application inventory.

The network 103 exemplifies any computer or communication network, including e.g. a (wired or wireless) local area network like LAN, WLAN, Ethernet, or the like, a (wired or wireless) wide area network like WiMAX, GSM, UMTS, LTE, or the like, and so on. Hence, the host 101 and the server 102 can but do not need to be located at different locations. For example, the network 103 may be any kind of TCP/IP-based network. Insofar, communication between the host 101 and the server 102 over the network 103 can be realized using for example any standard or proprietary protocol carried over TCP/IP, and in such protocol the agent at the host 101 and the malware analysis sandbox or application at the server 102 can be represented on/as the application layer.

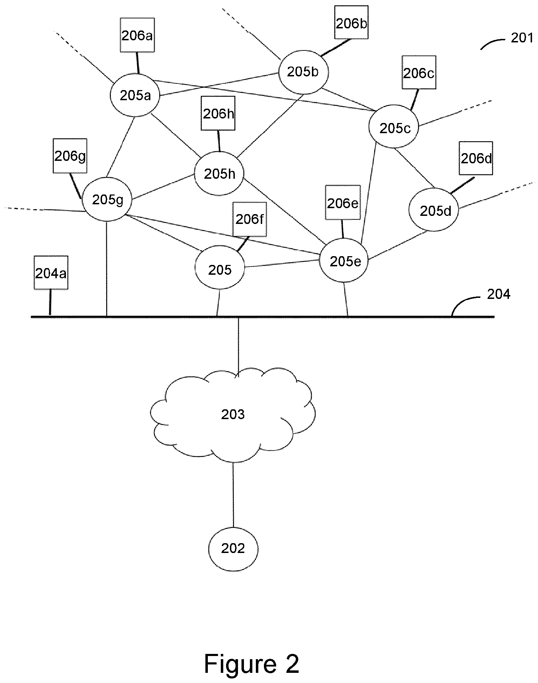

Figure 2 presents schematically also an example network architecture of one embodiment of the invention in which the solution of the invention can be used. In Figure 2 a part of a first local computer network 201 is schematically illustrated into which a computer system, for example an exposure management, EPP or an EDR system, has been installed. Also, any other computer system that is able to implement the embodiments of the invention can be used instead or in addition to the exposure management, EPP or EDR system used in this example. The first local computer network is connected to a security service network, in one embodiment a security backend system or server 202, through a network 203. The network can be similar as the network 103 in Figure 1. The backend system or server 202 can be similar as the server 102 of Figure 1. The backend system or server 202 can form a node on the security service computer network relative to the first local computer network. The security service computer network can be managed by a threat detection system provider and may be separated from the network 203 by a gateway or other interface (not shown) or other network elements appropriate for the backend 202. The first local computer network 201 may also be separated from the network 203 by a gateway 204 or other interface. Other network structures are also possible. In one embodiment of the invention the server can comprise a threat detection controller.

The first local computer network 201 may be formed of a plurality of interconnected network nodes 205a - 205h, each representing an element in the first local computer network 201 such as a computer, smartphone, tablet, laptop, or other piece of network enabled hardware. In one embodiment of the invention the node is any device on the network but not a gateway. Each network node 205a - 205h shown in the first local computer network can also represent an endpoint, e.g. an EDR endpoint and/or EPP endpoint, onto which an agent or a sensor 206a - 206h, that may include a data collector or sensor, is installed. The network nodes 205a - 205h can be similar as the local host 101 of Figure. The agent or sensor may also be installed in some embodiments of the invention on any other element of the computer network, such as on the gateway or other interface. In the example of Figure 2 a security agent module 204a has been installed on the gateway 204. In one embodiment of the invention the agents or sensors are the malware scanning agents or sensors. The agents or sensors, 206a - 206h, 204a can collect various types of data at the nodes 205a - 205h or gateway 204 including, for example, program or file hashes, files stored at the nodes 205a - 205h, logs of network traffic, process logs, binaries or files carved from memory (e.g. DLL, EXE, or memory forensics artefacts), and/or logs from monitoring actions executed by programs or scripts running on the nodes 205a - 205h or gateway 204 (e.g. TCP dumps). The agents or sensors, 206a - 206h, 204a can carry out other tasks, e.g. verify that a simulated attack path can be utilized. The data collected may be stored in a database or similar model for information storage for further use and/or sent to for further analysis. Any kind of threat detection models may further be constructed at the backend/server 202, and/or at a second server and be stored in the database. The nodes 205a - 205h and the server 202 typically comprise a hard drive, a processor, and RAM.

Any type of data which can assist in detecting and monitoring a security threat, such as a security breach or intrusion into the system and/or an attack path verification task, may be collected by the agents or sensors 206a - 206h, 204a during their lifecycle and that the types of data which are observed and collected may be set according to rules defined by the threat detection system provider upon installation of the threat detection system and/or when distributing components of a threat detection model. In an embodiment, a suspicious or malicious event among the monitored events may be detected by one or more detection mechanisms used. In an embodiment, the detection mechanisms used to detect the suspicious or malicious event and/or to verify a step of the attack path may comprise using a machine learning model, a scanning engine, a heuristic rule, a statistical anomaly detection, a fuzzy logic-based model, predetermined rules.

In an embodiment of the present invention, at least part of the agents or sensors 206a - 206h may also have capabilities to make decisions on the types of data observed and collected themselves. For example, the agents or sensors 206a - 206h, 204a may verify at least one step of the attack path and/or collect data about the behavior of programs running on an endpoint and can observe when new programs are started. Where suitable resources are available, the collected data may be stored permanently or temporarily by the agents or sensors 206a - 206h, 204a at their respective network nodes or at a suitable storage location on the first local computer network 201 and/or sent further.

The agents or sensors 206a - 206h, 204a can be set up such that they send information such as the data they have collected or send and receive instructions to/from the threat detection system backend 202 through the network 203, such as internet. This allows the threat detection system provider to remotely manage the system without having to maintain a constant human presence at the organization which administers the first local computer network 201 and/or to send tasks to agents, e.g. in order to verify their part of a simulated attack path, of e.g. a network and/or a host.

In one embodiment of the invention, the agents or sensors 206a - 206h, 204a can also be configured to establish an internal network, e.g. an internal swarm intelligence network, that comprises the agents or sensors of the plurality of interconnected network nodes 205a - 205h of the local computer network 201. As the agents or sensors 206a - 206h, 204a collect data related to the respective network nodes 205a - 205h of each agent or sensor 206a - 206h, 204a, they are further configured to share information that is based on the collected data in the established internal network. In one embodiment a swarm intelligence network is comprised of multiple semi-independent security nodes (security agent modules) which are capable of functioning on their own as well. Thus, the numbers of instances in a swarm intelligence network may well vary. There may also be more than one connected swarm intelligence networks in one local computer network, which collaborate with one another.

The agents or sensors 206a - 206h, 204a and/or the backend system can be further configured to use the collected data and information received from the internal network for generating and adapting models related to the respective network node 205a - 205h and/or its users.

The solution of the invention can be utilized for example in exposure management in which the exposure of a resource is determined. In exposure management data collected from multiple sources can be processed for shaping and maintaining asset inventories and further analysed for addressing the awareness aspect e.g. via collecting asset inventory variations and general properties of assets, shaping their vulnerability scopes and postures, scoring reputations of for example public assets, supply chain providers, Al providers, etc.

The solution of the invention uses attack path mapping and/or simulation for determining possible attack paths to the network and/or hosts of the network. This may involve for example identifying and analyzing the various entry points, vulnerabilities, and attack vectors that attackers could exploit to achieve their objectives and/or identification, threat modeling, vulnerability analysis, and path analysis. Attack path simulation can be done e.g. at a backend system and/or at the at least one server.

In the solution of the invention a list of vulnerabilities and/or misconfigurations of the at least one host in the network and/or a list of vulnerabilities and/or misconfigurations of the network are identified. This can be done by analyzing the hosts and/or by requesting this information from a service, e.g. an internal or external vulnerability management service. In one embodiment of the invention the vulnerabilities of the host and/or the network can be received from a vulnerability management service and/or analyzed by a vulnerability management service.

If an entry attack vector to a host is found with the attack path simulator, at least one attack path related to the host can be determined and/or created for the attack path map based on the vulnerability and/or misconfiguration information. An attack path map can be formed based on the attack path simulation, e.g. by including attack paths that could be used based on the vulnerabilities and/or misconfigurations of the hosts and/or the network.

Each determined attack path of the attack path map can be verified by the at least one agent in the attack path. The agents can verify that an attack or a part of the attack can be carried out as simulated. The agents can for example verify what attacks, vulnerability exploits and/or misconfigurations of the attack path simulation are usable, e.g. so that they are utilizable by malicious actors. If the verification by the agents determines that at least one attack of the attack path can't be carried out as simulated, the related attacks and/or paths from the attack path map can be removed from the attack path map because they are attacks and/or attack paths that were determined by the agent for being prevented, e.g. by a security control, in such a way that they cannot be carried out as simulated.

Verifying the attack path with at least one agent can comprise sending instructions to an agent in the host where a next potential step in attack path is, and/or which steps are verified as long as the steps of the attack path are usable by a malicious actor. In one embodiment of the invention the verification of a part of the attack path is continued to next part of the attack path as long as the verified steps are usable by a malicious actor or as long as the whole attack path is verified to be usable by a malicious actor (e.g. in which case all steps can be carried out as simulated by a malicious actor). In one embodiment of the invention verification of a part of the attack path is carried out by/at the host, such as an endpoint, and/or by/at multiple hosts, e.g. two hosts, for example in the case of lateral movement (in which case the verification of the part of the attack path can be done by a source host and destination host of the lateral movement). In one embodiment of the invention the server of the network can manage the attack path verification process by instructing individual agents at the hosts to verify their part of an attack path. An attack path can comprise a path with multiple hosts in the attack path.

If a part of the path is not utilizable by malicious actors based on the verification by the at least one agent that simulated attack path can be deleted from the attack path map as it can't be used by a malicious actor in the real system. On the other hand, an attack path can be kept in the attack path map if all steps and/or parts of the attack path are verified by the at least one agent to be implementable and/or usable by a malicious actor.

A verification whether a simulated attack path can be utilized at the host and or a network can comprise checking and/or analyzing whether a simulated operation could be performed e.g. by a host, user of the host, such as a user account, and/ or a network or system. The following list provides examples of verifications that can be done for verifying a part or step of the attack path:
- Testing and/or checking whether a host can establish a network connection to a target, e.g. a host or a system, that would be the next step in attack path.
- Checking whether host's or user's policies, such as web browser policies, allow storage of passwords and/or authentication cookies and/or tokens.
- Checking whether host's or user's web browser has master password enabled for password, cookie and/or other authentication storage.
- Requesting and/or receiving a list of company services for which the user has passwords, cookies and/or other authentication information stored in the browser.
- Verifying to which locations a host and/or a user has write capability in the local system, e.g. at endpoint, for example in order to analyze file location-based privilege escalation possibilities, such as potential DLL sideloading.
- Verifying to which registry branches, for example in Windows registry, the user has write-access to, for example in case there is a possibility for registry-based privilege escalation.
- Verifying the operating system process execution logs, prefetch cache and/or forensic artifacts, for example verifying is any vulnerable application(s).
- Verifying the operating system process execution logs, prefetch cache and/or forensic artifacts, for example verifying whether user has executed a vulnerable application that is found in the user system, or whether the application is associated as a reader and/or an application for any file types, e.g. so that it would be likely that a malicious actor could fool a user to execute malicious payload with the vulnerable application.
- Analyzing and/or enumerating local user accounts and to which local groups those accounts belong to and what privileges the accounts have.
- Analyzing and/or enumerating firewall rules, e.g. local firewall rules, for example of an endpoint
- Analyzing and/or enumerating which services are running that analyze and/or listen network interfaces, such as external network interfaces.

In one embodiment of the invention, verifying a step and/or a part of the attack path can comprise at least one of the following: verifying whether there is suitable network connection from a host to next part of the attack path, verifying whether the necessary preconditions for privilege escalation are in place, verifying whether the host has credentials which are accessible to a malicious actor, verifying whether a user would be able to write or execute files in a predefined location, such as a register, verifying whether a vulnerable application has been executed at the host, verifying whether there are vulnerabilities suitable for lateral movement on other hosts, verifying domain level privilege escalation, verifying available credentials that would be required to escalate attack further on an internal server.

The agent or the agents can use at least one of the following information when verifying the attack path: target network layout, routing rules, firewall rules, local user privileges, browser stored credentials, cloud credentials, API keys, registry configurations, file write permissions, list of services that are running which listen on external network interfaces, cryptographic authentication keys, such as SSH-keys.

An entry attack vector to a host which can be used and/or analyzed for an attack path can comprise for example some of the following misconfiguration and/or vulnerability related information: remote code execution in publicly visible service, and/or phishing opportunity due to user having a vulnerable client or player software installed, and/or a client software application by which user can execute an application by clicking, such as an email client, a web browser, an instant messaging client. An entry attack vector to a host which can be used and/or analyzed for an attack path can comprise for example some of the following misconfiguration and/or vulnerability related information: EDR/MDR-system information and/or process execution logs, e.g. which indicate(s) that an installed application has been used for phishing.

The solution of the invention can utilize threat detection service or system, e.g. for the hosts and/or the network. The threat detection system and/or service can comprise different components, for example processing or analysis services, external data sources and/or internal data sources. Processing or analysis services can comprise at least one of the following: static parsers, dynamic parsers, antivirus engines, EDR/MDR rule engines, EDR/MDR Al-based engines. External data sources can comprise at least one of the following: a domain search database, a virus database, a virus information source. Internal data sources can comprise at least one of the following: a threat intelligence information source, an incident information source, an asset information source. The threat detection components may comprise (in addition to or instead of the earlier components) at least one of the following components: a data source, a data collection agent, a data aggregation and normalization component: a data storage, an analysis engine, alerting and notification component, user interface component, reporting and logging component, an incident response tool, an integration tool, a machine learning algorithm, and an Al-algorithm, a rule engine, a scalability and/or redundancy unit, a threat intelligence feed.

The components can be specialized mechanisms responsible for carrying out different types of actions including (but not limited to): querying reputation services and metadata lookup databases, parsing composite objects (e.g., installer packages, emails, web pages, documents), analyzing obtained contents (like executables, process dumps, texts, images), obtaining behavioral data (e.g., via emulation and sandboxing facilities) and deciding on the collected facts, enriching awareness summary by threat landscape information, image tagging, sentiment analysis, machine translation, spell checking and identifying obfuscated data summarizing results of the analysis.

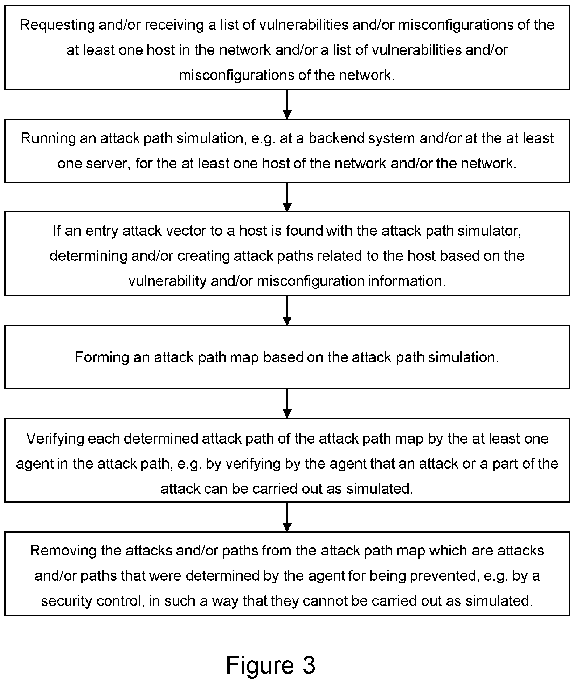

Figure 3 presents an example method according to one embodiment of the invention. The example method comprises requesting and/or receiving a list of vulnerabilities and/or misconfigurations of the at least one host in the network and/or a list of vulnerabilities and/or misconfigurations of the network, and running an attack path simulation, e.g. at a backend system and/or at the at least one server, for the at least one host of the network and/or the network. If an entry attack vector to a host is found with the attack path simulator, the method further comprises determining and/or creating attack paths related to the host, e.g. for each identified attack path, based on the vulnerability and/or misconfiguration information, forming an attack path map based on the attack path simulation, verifying each determined attack path of the attack path map by the at least one agent in the attack path, e.g. by verifying by the agent that an attack or a part of the attack can be carried out as simulated, and removing the attacks and/or paths from the attack path map which are attacks and/or paths that were determined by the agent for being prevented, e.g. by a security control, in such a way that they cannot be carried out as simulated.

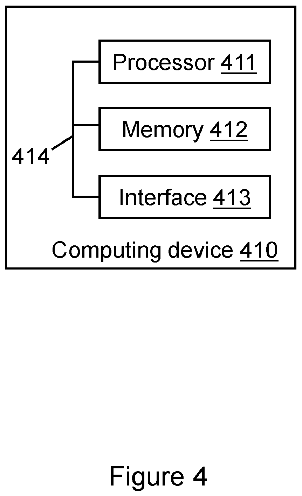

Figure 4 presents an example computing device, such as a host, an endpoint and/or a server, according to one embodiment of the invention. The computing device 410 may, for example, represent a local entity or host 1 in Figure 1, or may represent a remote entity or server 2 in Figure 1. The computing device 410 may be configured to perform a procedure and/or exhibit a functionality as described in any one of Figures 1 to 3.

The computing device may comprise at least one processor 411 and at least one memory 412 (and possibly also at least one interface 413), which may be operationally connected or coupled, for example by a bus 414 or the like, respectively. The processor 411 of the computing device 410 is configured to read and execute computer program code stored in the memory 412. The processor may be represented by a CPU (Central Processing Unit), a MPU (Micro Processor Unit), etc., or a combination thereof. The memory 412 of the computing device 410 is configured to store computer program code, such as respective programs, computer/processor-executable instructions, macros or applets, etc. or parts of them. Such computer program code, when executed by the processor 411, enables the computing device 410 to operate in accordance with exemplifying embodiments of the present invention. The memory 412 may be represented by a RAM (Random Access Memory), a ROM (Read Only Memory), a hard disk, a secondary storage device, etc., or a combination of two or more of these. The interface 413 of the computing device 410 is configured to interface with another computing device and/or the user of the computing device 410. That is, the interface 413 may represent a communication interface (including e.g. a modem, an antenna, a transmitter, a receiver, a transceiver, or the like) and/or a user interface (such as a display, touch screen, keyboard, mouse, signal light, loudspeaker, or the like).

The solution of the invention can be utilized for example in end point protection (EPP) systems. In one embodiment of the invention the hosts or computers can be protected by a threat detection system, such as an end point protection (EPP) or an EDR system. These systems can comprise endpoint-side security controls which make decisions both locally and in a decentralized fashion, e.g. so that some functional elements, such as facilitating attack detection processes, are hosted remotely. The local decision-making process can rely on specific and simple (and hence often false negative-prone) security controls aiming on prompt and reliable prevention of known attacks and their variants. In uncertain situations, ambiguous objects, such as previously unseen, untrusted executables and contexts of their appearances, are analysed by remote services which can offer broader and more complex detection analysis tools than the tools on the local hosts or endpoints. The remote services can for example utilize machine learning models that scrutinize the objects via deep static and dynamic inspection. In one embodiment of the invention an electronic file can be analyzed for malware, electronic file e.g. encompassing any electronic file including a runnable/executable part, such as any kind of application file. Insofar, exemplifying embodiments of the present invention are applicable to any such electronic file, including for example a file of an Android Application Package (APK), a Portable Executable (PE), a Microsoft Windows Installer (MSI) or any other format capable of distributing and/or installing application software or middleware on a computer.

The solution of the invention can be utilized for example in EDR- or MDR-systems. In EDR/MDR-systems the EDR/MDR-agents can consume data from EDR/MDR-sensor components, perform initial analysis to determine whether a given activity (e.g. a series of events) matches with an initial definition of malicious (e.g. suspicious, informative) behaviour and, if so, forward the information to the EDR/MDR-backend. This information can be collected by an agent component to provide context information so that an informed decision can be made regarding actions to be taken. EDR/MDR-backend can further analyse the information received from the agents deployed in an environment. EDR/MDR-sensors can work passively by intercepting data flowing through the system processes and as the sensors often need to sit inline of the processes, they must work fast. EDR/MDR-backend can pass the data to its decision logic using various methods, e.g. heuristics or rules databases, to ascertain whether the activity is benign, meets its threshold for being logged, highlighted as suspicious, malicious, etc.

In one embodiment of the invention actions relating to prioritizing potential treatments for an identified threat and/or security posture improvements can be carried out. In one embodiment of the invention an output of the threat detection component relates to at least one of the following: identified vulnerability, identified critical asset, priority of identified vulnerability, priority of critical asses, risk values for business of the identified asset and/or vulnerability, attack path mapping, visualization and reporting artifact.

The data collected with the solution of the invention may be stored in a database or similar model for information storage for further use.

In an embodiment, further actions may be taken to secure the computer or the computer network when a threat, vulnerability, misconfiguration, malicious file, application and/or activity has been detected. Also, actions by changing the settings of the computers or other network nodes can be done. Changing the settings may include, for example, one or more nodes (which may be computers or other devices) being prevented from being switched off in order to preserve information in RAM, a firewall may be switched on at one or more nodes to cut off the attacker immediately, network connectivity of one or more of the network nodes may be slowed down or blocked, suspicious files may be removed or placed into quarantine, logs may be collected from network nodes, sets of command may be executed on network nodes, users of the one or more nodes may be warned that a threat or anomaly has been detected and that their workstation is under investigation, and/or a system update or software patch may be sent from the security backend to the nodes. In one embodiment of the invention one or more of these actions may be initiated automatically.

Although the invention has been described in terms of preferred embodiments as set forth above, it should be understood that these embodiments are illustrative only and that the claims are not limited to those embodiments. Those skilled in the art will be able to make modifications and alternatives in view of the disclosure which are contemplated as falling within the scope of the appended claims. Each feature disclosed or illustrated in the present specification may be incorporated in the invention, whether alone or in any appropriate combination with any other feature disclosed or illustrated herein. Lists and groups of examples provided in the description given above are not exhaustive unless otherwise explicitly stated.

## Claims

1. An exposure management method in a network, the network comprising at least one host, such as an endpoint (101, 205a-205h) and/or a server (102, 202), wherein a security agent (206a - 206h, 204a) is installed to at least one host, wherein the method comprises:
requesting and/or receiving a list of vulnerabilities and/or misconfigurations of the at least one host in the network (201) and/or a list of vulnerabilities and/or misconfigurations of the network (201),
running an attack path simulation, e.g. at a backend system and/or at the at least one server (102, 202), for the at least one host of the network and/or the network (201),
if an entry attack vector to a host is found with the attack path simulator, determining and/or creating at least one attack path related to the based on the vulnerability and/or misconfiguration information,
forming an attack path map based on the attack path simulation,
verifying each determined attack path of the attack path map by the at least one agent (206a - 206h, 204a) in the attack path, e.g. by verifying by the agent (206a - 206h, 204a) that an attack or a part of the attack can be carried out as simulated, and
removing the attacks and/or paths from the attack path map which are attacks and/or paths that were determined by the agent (206a - 206h, 204a) for being prevented, e.g. by a security control, in such a way that they cannot be carried out as simulated.

2. A method according to claim 1, wherein the method comprises receiving a list of detected known vulnerabilities found by e.g. a vulnerability management service.

3. A method according to claim 1 or 2, wherein in the method the agents (206a - 206h, 204a) verify what attacks, vulnerability exploits and/or misconfigurations of the attack path simulation are usable, e.g. so that they are utilizable by malicious actors.

4. A method according to any previous claim, wherein verifying the attack path with at least one agent (206a - 206h, 204a) comprises sending instructions to an agent (206a - 206h, 204a) in the host where a next potential step in attack path is, and/or which steps are verified as long as the steps of the attack path are usable by a malicious actor.

5. A method according to any previous claim, wherein a simulated attack path is deleted from the attack path map if a part of the path is not utilizable by malicious actors based on the verification by the at least one agent (206a - 206h, 204a).

6. A method according to any previous claim, wherein an attack path is kept in the attack path map if all steps and/or parts of the attack path are verified by the at least one agent (206a - 206h, 204a) to be implementable and/or usable by a malicious actor.

7. A method according to any previous claim, wherein verifying a step and/or a part of the attack path comprises at least one of the following: verifying whether there is suitable network connection from a host to next part of the attack path, verifying whether the necessary preconditions for privilege escalation are in place, verifying whether the host has credentials which are accessible to a malicious actor, verifying whether a user would be able to write or execute files in a predefined location, such as a register, verifying whether a vulnerable application has been executed at the host, verifying whether there are vulnerabilities suitable for lateral movement on other hosts, verifying domain level privilege escalation, verifying available credentials that would be required to escalate attack further on an internal server.

8. A method according to any previous claim, wherein the agent (206a - 206h, 204a) uses or the agents use at least one of the following information when verifying the attack path: target network layout, routing rules, firewall rules, local user privileges, browser stored credentials, cloud credentials, API keys, registry configurations, file write permissions, list of services that are running which listen on external network interfaces, cryptographic authentication keys, such as SSH-keys.

9. A method according to any previous claim, wherein the entry attack vector to a host comprises at least remote code execution in publicly visible service, and/or phishing opportunity due to user having a vulnerable client or player software installed, and/or a client software application by which user can execute an application by clicking, such as an email client, a web browser, an instant messaging client, and/or
the entry attack vector to a host comprises information, such as EDR/MDR-system information and/or process execution logs, which indicate(s) that an installed application has been used for phishing.

10. A method according to any previous claim, wherein the server (102, 202) of the network manages the attack path verification process by instructing individual agents (206a - 206h, 204a) at the hosts to verify their part of an attack path.

11. A server for an exposure management of a network, the network (201) comprising at least one host, such as an endpoint (101, 205a-205h) and at least one server (102, 202), wherein a security agent (206a - 206h, 204a) is installed to at least one host, wherein the server (102, 202) is configured:
to request and/or to receive a list of vulnerabilities and/or misconfigurations of the at least one host in the network (201) and/or a list of vulnerabilities and/or misconfigurations of the network (201),
to run an attack path simulation for the at least one host of the network and/or the network (201),
if an entry attack vector to a host is found with the attack path simulator, to determine and/or to create at least one attack path related to the host based on the vulnerability and/or misconfiguration information,
to form an attack path map based on the attack path simulation,
to instruct the agents (206a - 206h, 204a) in the attack path to verify that an attack or a part of the attack can be carried out as simulated, and
to remove, based on the information received from the agents (206a - 206h, 204a), the attacks and/or paths from the attack path map which are attacks and/or paths that were determined by the agents (206a - 206h, 204a) for being prevented, e.g. by a security control, in such a way that they cannot be carried out as simulated.

12. An exposure management system comprising:
at least one endpoint (101, 205a-205h) comprising a security agent is installed to the endpoint, and/or
at least one server, wherein the server is a server (102, 202) according to claim 11.

13. An exposure management system wherein the exposure management system is configured to carry out a method according to any claim 2-10.

14. A computer program comprising instructions which, when executed by a computer, cause the computer to carry out the method according to any of claims 1 - 10.

15. A computer-readable medium comprising the computer program according to claim 14.
